Europäisches Patentamt

**European Patent Office**

**Office européen des brevets**

(11) Veröffentlichungsnummer: **0 030 698**

**A2**

(12) **EUROPÄISCHE PATENTANMELDUNG**

(21) Anmeldenummer: **80107723.1**

(22) Anmeldetag: **08.12.80**

(51) Int. Cl.³: **G 21 C 15/18**
**G 21 C 9/00**

(30) Priorität: **17.12.79 SE 7910355**

(43) Veröffentlichungstag der Anmeldung:
**24.06.81 Patentblatt 81/25**

(84) Benannte Vertragsstaaten:
**DE FR GB IT**

�['71'] Anmelder: **AB ASEA ATOM**

**S-721 83 Västeras(SE)**

(72) Erfinder: **Hannerz, Käre**
**Räby, Rytterne**
**S-725 92 Västeräs(SE)**

(74) Vertreter: **Boecker, Joachim, Dr.-Ing.**
**Rathenauplatz 2-8**
**D-6000 Frankfurt a.M. 1(DE)**

(54) **Siedewasserreaktor.**

㉧ Ein Siedewasserreaktor enthält einen Reaktorkern (1) und einen diesen umgebenden Druckbehälter (2), der mit mindestens einer Rohrleitung (14) für abzulassenden Dampf und mit mindestens einer Rohrleitung (16) für Speisewasser versehen ist und der bei Normalbetrieb bis zu einer bestimmten Höhe (Normalniveau) (11) mit Wasser gefüllt ist, wobei der Dampfdruck im Druckbehälter einen im wesentlichen konstanten Wert von mindestens 5 MPa hat. Der Druckbehälter (2) kann mit einem wassergefüllten Becken (3) verbunden werden, bei dem das Volumen des Teils des im Becken vorhandenen Wassers, der oberhalb des Reaktorkerns (1) liegt, größer ist als das Volumen des im Druckbehälter (2) befindlichen Wassers. Der Druckbehälter (2) ist ein Betonbehälter mit einer inneren Wärmeisolierung (9). Der Reaktor enthält Notkühlleitungen (19,20) mit Ventilen (19', 20'), die den Druckbehälter (2) mit dem Becken (3) verbinden. Die Ventile (19', 20') sind normalerweise geschlossen. Die Leitungen (19, 20) sind auf verschiedenen Niveaus angebracht. Die Notkühlventile (19', 20') werden derart in Abhängigkeit des Wasserstandes (11) im Reaktorbehälter (2) gesteuert, daß sie geöffnet werden, wenn der Wasserstand eine bestimmte Höhe unterschreitet. Bei geöffneten Ventilen (19', 20') kann Dampf durch die oberen Notkühlleitungen (19) aus dem Reaktorbehälter (2) herausströmen und Wasser vom Becken (3) durch die unteren Not-kühlleitungen (20) in den Druckbehälter (2) hineinströmen, wenn im Becken der Druckunterschied zwischen dem Niveau der unteren Notkühlleitungen und dem Niveau der oberen Notkühlleitung größer ist als der Druckabfall in der oberen Notkühlleitung. Die Notkühlung wird ohne Hilfe von Pumpen durchgeführt.

FIG.1

Patentanwalt und Rechtsanwalt
Dr.-Ing. Dipl.-Ing. Joachim B o e c k e r

**0030698**

6 Frankfurt / Main 1 , 28.11.1980
Rathenauplatz 2 - 8
Telefon· (06 11) * 28 23 55      B/th 20 887 PE
Telex· 4 189 066 itax d

Aktiebolaget ASEA-ATOM, Västeras/Schweden

## Siedewasserreaktor

Die Erfindung betrifft einen Siedewasserreaktor gemäß dem Oberbegriff des Anspruches 1.

Bei solchen Siedewasserreaktoren ist es wichtig, eine extrem hohe Sicherheit gegen ein Trockensieden zu schaffen. Reaktoren mit einer solchen hohen Sicherheit, die aber nur der Erzeugung von Wärme dienen, sind bekannt aus den DE-OSen 26 25 543 und 26 25 542. Diese bekannten Reaktoren dienen vor allem für Fernheizwerke und können nur bei einer verhältnismäßig niedrigen Temperatur, d.h. im Temperaturbereich von 100 bis 200° C, arbeiten.

Der Erfindung liegt die Aufgabe zugrunde, einen Siedewasserreaktor der eingangs genannten Art mit extrem hoher Sicherheit gegen Trockensieden zu entwickeln, der zum Antrieb einer Dampfturbine und zur Erzeugung von Dampf bei einem Betriebsdruck von mindestens 5 MPa geeignet ist.

Zur Lösung dieser Aufgabe wird ein Siedewasserreaktor nach dem Oberbegriff des Anspruches 1 vorgeschlagen, der erfindungsgemäß die im kennzeichnenden Teil des Anspruches 1 genannten Merkmale hat.

/2

Vorteilhafte Weiterbildungen der Erfindung sind in den Unteransprüchen genannt.

Anhand der in den Figuren gezeigten Ausführungsbeispiele soll die Erfindung näher erläutert werden. Es zeigen

Fig. 1 einen Vertikalschnitt durch einen Reaktor gemäß der Erfindung bei Normalbetrieb,

Fig. 2 den Reaktor gemäß Figur 1 in gleicher Schnittdarstellung in einem Zustand, nachdem ein Ablassen durch die obere Notkühlleitung im Reaktorbehälter stattgefunden hat,

Fig. 3 im Vertikalschnitt Ventile für eine obere und eine untere Notkühlleitung sowie die zugehörigen Steueranordnungen für eine erste Ausführungsform gemäß der Erfindung,

Fig. 4 und 5 Einzelheiten der Steuersysteme der Notkühlventile bei einer zweiten und dritten Ausführungsform gemäß der Erfindung.

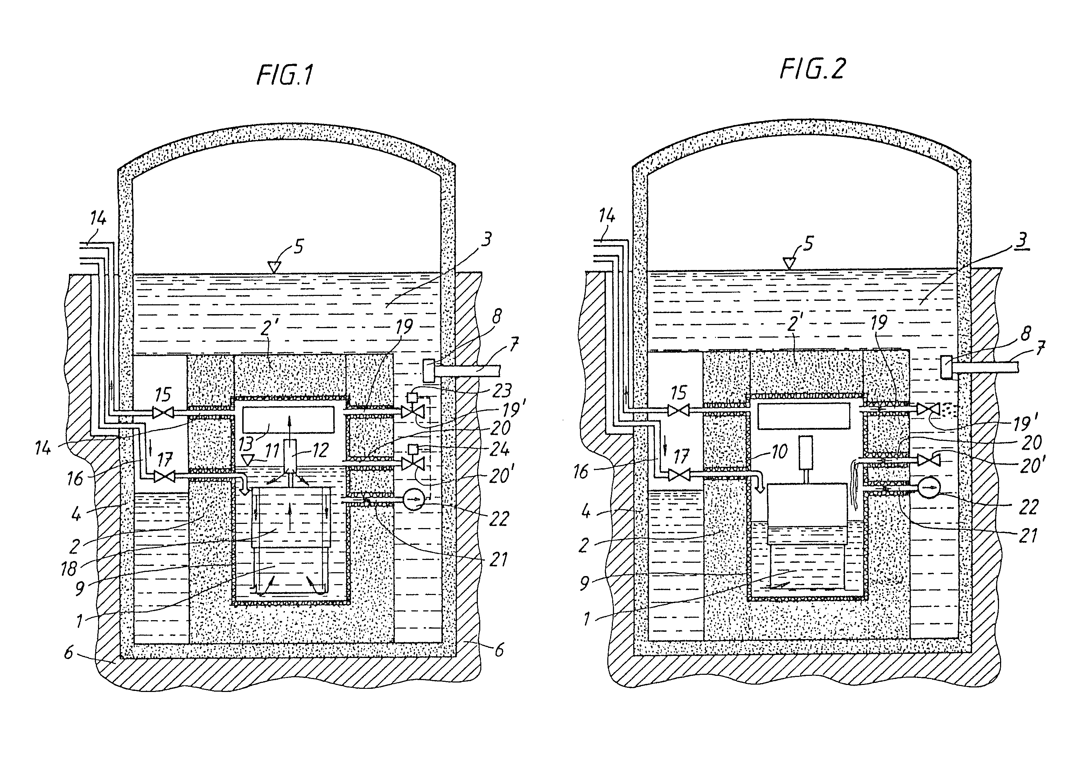

In den Figuren bezeichnet 1 den Reaktorkern eines Siedewasserreaktors und 2 einen aus Beton bestehenden Druckbehälter, der für einen Druck von mindestens 5 MPa bemessen ist. Der Deckel des Druckbehälters ist mit 2' bezeichnet. Der Druckbehälter 2 ist in einem Becken 3 untergebracht, das von Betonwänden 4 gebildet wird. Der Druckbehälter 2 braucht nicht direkt von Wasser umgeben zu sein. Die Hauptsache ist, daß Wasser in ausreichender Menge in einem Beckenvolumen vorhanden ist, das oberhalb des Kerns liegt. Der Wasserstand im Becken ist durch das Niveausymbol 5 angedeutet. Der mit Wasser gefüllte Teil des Beckens 3 ist in einer Grube im Erdreich, beispielsweise in einem Berg, angeordnet und ist beispielsweise von einer dichten Lehmschicht 6 umgeben, deren Dicke bedeutend größer als die Dicke der Wände 4 ist. Das Becken 3 ist vorzugsweise über eine Zuleitung mit einem großen Wasserreservoir verbunden. Figur 1 zeigt eine solche Zuleitung 7, die mit einem Ventil 8 versehen ist, das von einem

/3

nicht dargestellten Niveauwächter gesteuert wird. Der
Druckbehälter 2 ist aus Spannbeton hergestellt. Er ist
innen mit einer dicken wärmeisolierenden Schicht 9 versehen. Ein dünnes metallisches Futter 10 ist radial
innerhalb der Schicht 9 angeordnet. Bei normalem Betrieb
hat der Wasserstand im Druckbehälter 2 die durch das Niveausymbol 11 angedeutete Höhe. Das Wasser wird mittels
nicht dargestellter Zirkulationspumpen in der durch die
Pfeile angedeuteten Richtung durch den Kern 1 gepumpt.
Es kann auch mit Selbstzirkulation gearbeitet werden.
Der im Kern entstehende Dampf durchströmt den Dampfseparator 12 und einen Dampftrockner 13 und verläßt danach
den Druckbehälter 2 durch mehrere mit einer Turbine verbundene Dampfleitungen 14, von denen jede mit einem
Dampfventil 15 versehen ist. Speisewasser gelangt über
mehrere Speisewasserleitungen, von denen jede mit einem
Speisewasserventil 17 versehen ist, in den Druckbehälter.
In den Figuren nicht dargestellte mit hydraulischen Antriebsvorrichtungen ausgerüstete Steuerstäbe sind in
einem mit Wasser gefüllten Raum 18 über dem Kern 1 angeordnet. Der Teil des im Becken 3 befindlichen Wassers,
der oberhalb des höchsten Punktes des Reaktorkerns 1
liegt, hat ein Volumen, das mindestens so groß ist, wie
die Wassermenge des Reaktorbehälters bei normalem Betrieb,
vorzugsweise jedoch mehr als dreimal so groß.

Die zylindrische Wand des Druckbehälters 2 ist mit mindestens einer oberen Notkühlleitung 19 und mit mindestens
einer unteren Notkühlleitung 20 versehen, die über Ventile 19' bzw. 20', die bei normalem Reaktorbetrieb geschlossen sind, in das Becken 3 münden. Die Ventile 19'
und 20' können über ihnen zugeordnete hydraulische Differentialsteuervorrichtungen 23 bzw. 24 derart betätigt
werden, daß sie geschlossen sind, solange eine Druckdifferenz, die jeder Steuervorrichtung zugeführt wird, oberhalb eines bestimmten Wertes liegt. Dagegen werden die

/4

Ventile völlig geöffnet, wenn die Druckdifferenz unter den genannten Wert sinkt. Die den Steuervorrichtungen 23 und 24 zugeführte Druckdifferenz wird durch eine außerhalb des Druckbehälters 2 angeordnete Abtastpumpe 22 erzeugt, deren Eingangsseite an eine Abtastleitung 21 angeschlossen ist, die in den Druckbehälter 2 auf einem Niveau mündet, das unter dem Normalniveau 11, jedoch nicht unter dem niedrigsten zulässigen Wasserniveau im Druckbehälter 2 liegt.

Die Notkühlleitung 19 ist für herausströmenden Dampf vorgesehen, während die Notkühlleitung 20 für in den Druckbehälter hineinströmendes Beckenwasser vorgesehen ist. Bei einer Störung soll soviel Dampf durch die Leitung 19 und das Ventil 23 herausströmen können, daß der Dampfdruck im Druckbehälter von normalem Betriebsdruck auf einen Druck absinkt, der sich nur geringfügig, beispielsweise um weniger als 3 m Wassersäule, von dem hydrostatischen Druck an derjenigen Stelle im Becken 3 unterscheidet, an der die Notkühlleitung 19 durch die Wand des Druckbehälters hindurchgeht. Vergleicht man diesen hydrostatischen Druck mit dem Druck an der Stelle im Becken, an der die Notkühlleitung 20 durch die Wand des Druckbehälters hindurchgeht, so erkennt man, daß Wasser durch die Leitung 20 in den Druckbehälter hineinströmt, wenn die Differenz zwischen dem erstgenannten und dem letztgenannten Druck den Druckabfall des durch die Leitung 19 und das Ventil 19' strömenden Dampfes übersteigt.

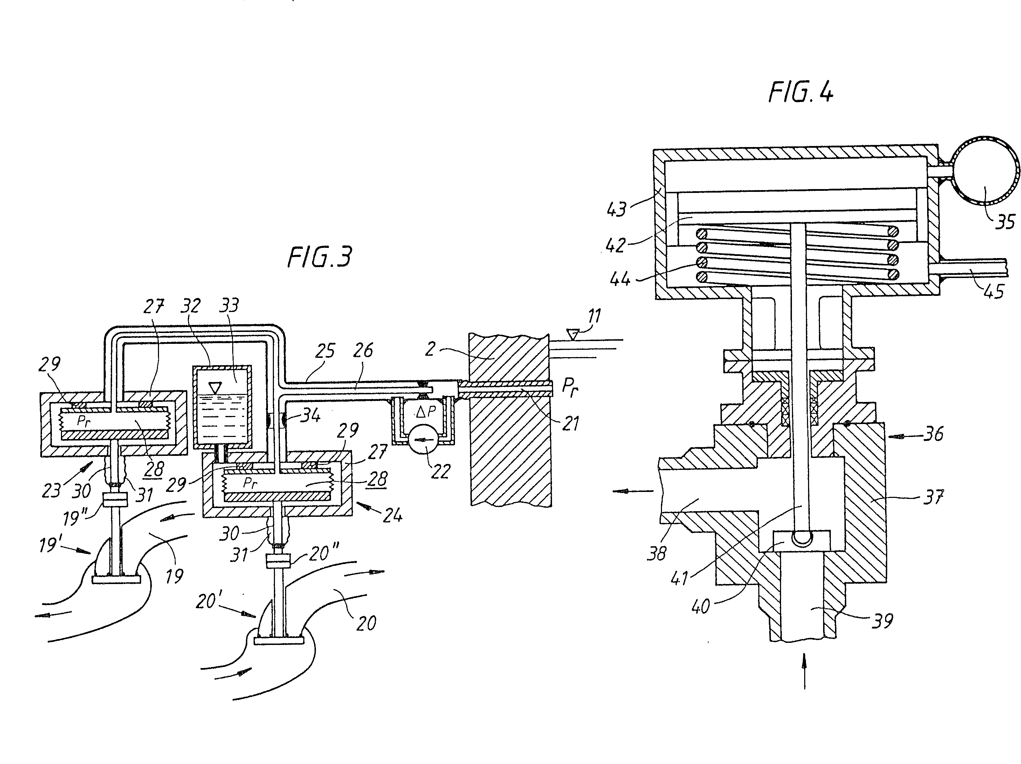

Das Prinzip, nach dem die hydraulischen Differentialsteuervorrichtungen 23 und 24 arbeiten, geht aus Figur 3 hervor.

Bei normalem Betrieb arbeitet die Abtastpumpe 22 kontinuierlich. Den Differentialsteuervorrichtungen 23 und 24 werden über zwei konzentrische Leitungen 25 und 26 einerseits Wasser mit einem Druck $P_r$ zugeführt, der gleich dem Druck im Reaktordruckbehälter 2 an der Stelle ist, an der die Abtastleitung 21 in den Druckbehälter mündet, und andererseits Wasser mit einem Druck $P_t$, der gleich der Summe von $P_r$ und einem Druck $\triangle P$ ist, der mit Hilfe der Abtastpumpe 22 zustandekommt. Der Druck $P_r$ wird den beiden Druckdifferentialsteuervorrichtungen 23 und 24 über die Leitungen 26 zugeführt, während der Druck $P_t$ über die Leitung 25 zugeführt wird. Jede der Vorrichtungen 23 und 24 besteht aus einem geschlossenen, kreiszylindrischen Druckbehälter 27 und einem in diesem eingeschlossenen, koaxial angeordneten Balgen 28, der in axialer Richtung flexibel ist. Die eine Stirnwand des Balgens 28 ist mit Hilfe mehrerer Befestigungsklötze 29 mechanisch fest mit einer ebenen kreisförmigen Innenfläche des Behälters 27 verbunden, während die andere Stirnwand des Balgens mit einer Betätigungsstange 30 versehen ist, die druckdicht durch die Wand des Druckbehälters mit Hilfe eines an dieser Wand und der Betätigungsstange festgeschweißten Dichtungsbalgens 31 geführt ist. Bei jeder Differentialdrucksteuervorrichtung 23 und 24 ist der Druckbehälter 27 mit der Leitung 25 hydraulisch verbunden, während der Balgen 28 mit der Leitung 26 hydraulisch verbunden ist. Bei normalem Reaktorbetrieb herrscht in jedem Balgen 28 ein innerer Druck $P_r$, der mit dem Druck an derjenigen Stelle im Reaktorbehälter 2 übereinstimmt, an der die Abtastleitung 21 in den Druckbehälter mündet, während der äußere Druck $P_t$ an jedem Balgen 28 mit $P_r + \triangle P$ übereinstimmt. Dies bedeutet, daß jeder Balgen 28 einer axialen Kraft ausgesetzt ist, die $P_t - P_r$, d.h. dem Pumpendruck $\triangle P$ proportional ist. Bei normalem Reaktorbetrieb ist der Pumpendruck $\triangle P$ konstant; er liegt im Bereich von 2 bis 30 %, vorzugsweise 3 bis 15 % des Dampfdruckes im Druckbehälter 2. Die genannte dem Pumpendruck proportionale Kraft wird zum größten Teil vom Ventil 19' bzw. 20' aufgenommen, und zwar derart, daß das Ventil geschlossen gehalten wird. Jede Betätigungsstange 30 ist mit Hilfe einer mechanischen Kupplung 19" bzw. 20" mit dem entsprechenden Ventil verbunden.

Wenn die Druckdifferenz $\Delta P$ unter einen bestimmten Wert sinkt, verlängert sich jeder Balgen 28 in axialer Richtung so weit, daß die Ventile 19' und 20' geöffnet werden. Zum Unterschied vom Ventil 19' öffnet das Ventil 20' mit einer gewissen Verzögerung. Dieses erreicht man mit Hilfe einer Verzögerungsanordnung, die aus einem an den Behälter 27 angeschlossenen Hilfsdruckbehälter 32 und einer Drosselvorrichtung 34 besteht, die in der äußeren der beiden an die Differenzvorrichtung 24 angeschlossenen konzentrischen Druckleitungen angeordnet ist. Der Hilfsdruckbehälter 32 enthält ein Luftkissen 33.

Wenn ein Rohrbruch in einer Dampfleitung 14 oder in einer Speisewasserleitung 16 eintritt, so kann das Wasserniveau im Druckbehälter 2 erheblich unter das Normalniveau 11 sinken. Wenn das Wasserniveau unter ein bestimmtes zulässiges Niveau sinkt, d.h. so weit sinkt, daß die Einsaugöffnung der Abtastleitung 21 nicht mehr unter dem Wasserspiegel liegt, dann tritt eine deutliche Reduktion des Ausgangsdruckes der Abtastpumpe 22, d.h. der Druckdifferenz $\Delta P$, ein, was zur Folge hat, daß das Notkühlventil 19' der oberen Notkühlleitung 19 öffnet, so daß Dampf in das Beckenwasser geblasen wird und darin kondensiert. Nach einem kurzen Zeitintervall, z.B. 3 bis 30 Minuten, vorzugsweise 10 bis 15 Minuten, ist soviel Dampf abgelassen worden, daß der Druck im Druckbehälter 2 von einem Normalwert von mindestens 5 MPa auf einen Wert gesunken ist, der vom Wasserniveau 5 im Becken 3 bestimmt wird. Jetzt öffnet auch das verzögerte Notkühlventil 20',

/7

so daß Beckenwasser durch die untere Notkühlleitung 21 in den Druckbehälter 2 strömt, wie es in Figur 2 angedeutet ist.

Dadurch, daß die Leitung 26 von der Leitung 25 umgeben ist, ist die erstere gut gegen Rohrbrüche geschützt. Sollte ein Rohrbruch in der Leitung 25 auftreten, so hätte dies ein Öffnen der Notkühlventile zur Folge.

Ein schnelles Abblasen, d.h. ein Abblasen mit einer verhältnismäßig großen Dampfmenge pro Zeiteinheit, kann zur Folge haben, daß das im Druckbehälter vorhandene Wasser so stark mit Dampf vermischt wird, daß kaum eine wohldefinierte Grenze zwischen Wasser und Dampf vorhanden ist. Für die Arbeitsweise einer Notkühlung bei einem Reaktor nach der Erfindung genügt es daher nicht festzustellen, daß der Druck der Abtastpumpe stark reduziert wird, wenn das Wasserniveau unter eine bestimmte Grenze sinkt. Vielmehr ist auch die starke Vermischung des im Druckbehälter vorhandenen Wassers mit Dampf bei einem Reaktor nach der Erfindung ein Kriterium dafür, daß die beschriebene Notkühlung ausgelöst werden muß. Eine Auslösung wird dann stattfinden, wenn der Dampfinhalt des Wassers in der Nähe der Abtastleitung 21 über einen bestimmten Wert steigt, bei dem der Ausgangsdruck der Abtastpumpe unter einen Minimaldruck sinkt, der notwendig ist, um die Ventile 19' und 20' geschlossen zu halten.

Wenn die Notkühlventile geöffnet sind und folglich Wasser in den Druckbehälter hineinfließt und Dampf in der vorstehend beschriebenen Weise aus dem Druckbehälter herausströmt, dann wird der Kern durch natürliche Zirkulation zwischen Kern und Becken zuverlässig gekühlt. Der Reaktorbehälter wird so groß ausgeführt, daß der Kern in allen vorkommenden Fällen während des ganzen Abblasverlaufes und auch hiernach mit Wasser bedeckt bleibt.

Das Trockensieden des Kerns, das eine Voraussetzung für ein Kernschmelzen ist, kann erst dann geschehen, wenn das Beckenwasser verdampft ist. Das Becken wird so groß ausgeführt, daß ein Trockensieden frühestens nach mehreren Wochen stattfinden kann. Außerdem kann Wasser durch die Leitung 7 nachgeführt werden. Der Reaktorbehälter 2 wird vorzugsweise mit mehreren oberen Notkühlleitungen 19 und mit mehreren unteren Notkühlleitungen 20 versehen, wobei jede Notkühlleitung mit einem Notkühlventil und der zugehörigen Differentialsteuervorrichtung versehen wird.

Ein Reaktor nach der Erfindung ist vorzugsweise mit mehreren oberen Notkühlleitungen 19 ausgeführt, von denen jede mit einem gesteuerten Ventil 19' und einer Differentialsteuervorrichtung 23 versehen ist. Es ist dann vorteilhaft, einige der Differentialsteuervorrichtungen mit individuellen Verzögerungsanordnungen zu versehen, deren Verzögerungszeiten untereinander verschieden und alle kleiner sind als die Verzögerungszeit der Differentialsteuervorrichtungen 24 für die unteren Notkühlleitungen. Dies kann z.B. mittels Verzögerungsanordnungen der in Fig. 3 gezeigten Art erreicht werden. Bei ein und demselben von einem Niveaugeber, z.B. der Abtastpumpe 22, abgegebenen Signal wird dann eines der Ventile 19' ohne nennenswerte Verzögerung ansprechen und die übrigen in Abständen, die z.B. größer als eine Minute, vorzugsweise größer als zwei Minuten sind. Dadurch wird ein zu heftiges Sieden im Druckbehälter vermieden.

Statt der in Figur 3 gezeigten Ausführung kann man eine etwas abgewandelte Ausführung anwenden, bei der die Abtastpumpe 22 und die Leitungen 21, 25 und 26 im Verhältnis zueinander und zum Reaktordruckbehälter 2 gemäß Figur 3 angeordnet sind, jedoch mehrere untereinander gleiche, entsprechend Figur 4 ausgeführte Notkühlventile 36 mit Hilfe einer gemeinsamen Druckluftquelle 35 gesteuert werden. Die Druckluftquelle 35 kann zweckmäßigerweise an mehrere obere und an mehrere untere im wesentlichen gemäß Figur 4 ausgeführte Notkühlventile angeschlossen sein, wobei die unteren über eine gemeinsame Verzögerungsanordnung, die nach demselben Prinzip wie die in Figur 3 gezeigte aufgebaut ist, an die Druckluftquelle 35 angeschlossen sind, während einige der oberen mit verhältnismäßig kleinen, unter sich verschiedenen Verzögerungszeiten ausgeführt sind. Das Ventil 36 hat ein Ventilgehäuse mit zwei Ausbohrungen 38 und 39, wobei die Ausbohrung 38 in Beckenwasser mündet und die Ausbohrung 39 an eine Notkühlleitung angeschlossen wird. Ein Ventilteller 40 ist über eine Betätigungsstange 41 mit einem Betätigungskolben 42 verbunden, der in einem Betätigungszylinder 43 untergebracht ist. Eine Feder 44 übt eine Druckkraft auf die Unterseite des Kolbens 42 aus. Bei normalem Reaktorbetrieb ist die Feder 44 zusammengepreßt und das Ventil geschlossen, da Druckluft von der Druckluftquelle 35 einen Haltedruck auf die Oberseite des Betätigungskolbens 42 ausübt. Wenn der Druck $\Delta P$ der Abtastpumpe 22 unter einen bestimmten Wert sinkt, öffnet die Differentialdrucksteuervorrichtung 23 ein nicht dargestelltes Entleerungsventil in der Druckluftquelle 35, was zur Folge hat, daß der Haltedruck auf den Kolben 42 fortfällt und sämtliche an die Druckquelle 35 angeschlossenen Notkühlventile geöffnet werden.

Der unter dem Betätigungskolben 42 befindliche Druckzylinderraum hat einen Anschluß 45 für ein Betätigungsdruckmittel zur normalen Abblasung und zur Kontrolle während des Betriebs.

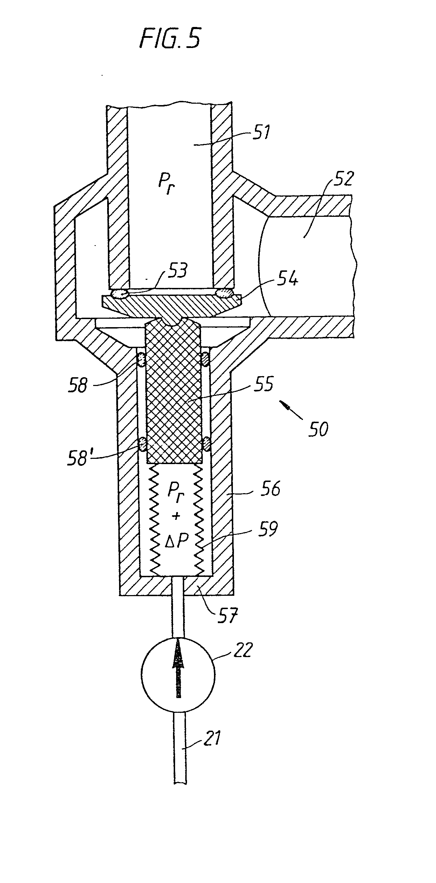

Bei der in Figur 5 dargestellten Ausführungsform der Erfindung sind mehrere Notkühlleitungen 19 und mehrere Notkühlleitungen 20 mit Notkühlventilen versehen, deren zugehörigen Steuervorrichtungen jeweils in das Ventilgehäuse eingebaut sind. In Fig. 5 hat das Ventilgehäuse 50 einen mit einer Notkühlleitung verbundenen Hochdruckkanal 51 und einen mit dem Becken 3 verbundenen Niederdruckkanal 52. Der Hochdruckkanal 51 ist am ventilinneren Ende mit einem ringförmigen Ventilsitz 53 versehen und ist bei normalem Reaktorbetrieb durch einen entsprechenden Ventilkörper 54 verschlossen. Der Ventilkörper 54 ist mechanisch mit einem Betätigungskörper 55 verbunden. Das Ventilgehäuse 50 hat ein herausragendes, zylindrisches Gehäuseteil 56, dessen axial äußeres Ende eine Stirnwand 57 hat. Die Zylinderachse des Gehäuseteils 56 ist auf den Mittelpunkt des ringförmigen Ventilsitzes 53 gerichtet. Der Betätigungskörper 55 ist koaxial in zwei nicht dichtenden Gleitringen 58 und 58' mit axialer Beweglichkeit im Gehäuseteil 56 gelagert. Ein rohrförmiger Balgen 59 ist koaxial im Gehäuseteil 56 angeordnet, wobei die Enden des Balgens 59 an dem Betätigungskörper 55 bzw. an der Stirnwand 57 druckfest angeschweißt sind. Die Ausgangsseite der Abtastpumpe 22 ist druckfest mit dem Inneren des Balgens 59 verbunden. Wie oben ist der Druck des Druckbehälters 2 mit $P_r$ und der von der Abtastpumpe 22 erzeugte Druck mit $\Delta P$ bezeichnet. Die Fläche des Ventilkörpers 54, die dem Druck $P_r$ ausgesetzt ist, ist bedeutend größer als die Fläche des Betätigungskörpers 55, die dem Druck $P_r + \Delta P$ ausgesetzt ist. Bei normalem Reaktorbetrieb ist indessen der zusätzliche Druck $\Delta P$ so groß, daß der Ventilkörper 54 in seiner Verschlußlage gehalten wird. Wenn der Druck $\Delta P$ unter einen bestimmten Wert sinkt, öffnet das Ventil.

Vorzugsweise sind einige der Ventilanordnungen des Reaktors gemäß Figur 5 ausgeführt, d.h. ohne eine Verzögerungsanordnung, während andere mit Verzögerungsanordnungen versehen sind. Letzteres kann beispielsweise in der Weise erfolgen, daß der in Figur 3 dargestellte Hilfsdruckbehälter 32 an einen Zweig der Verbindungsleitung zwischen dem Balgen 59 und der Pumpe 22 angeschlossen wird und die in Figur 3 gezeigte Drosseleinrichtung zwischen dem Zweig und der Pumpe 22 angeordnet wird.

Das vorstehend beschriebene Notkühlprinzip hat zur Folge, daß es innerhalb sehr kurzer Zeit zu einer starken Temperatursenkung in dem vom Druckbehälter umschlossenen Raum kommen kann. Da es sich bei dem Druckbehälter um einen Betonbehälter handelt, der ähnlich wie die bekannten Betonbehälter mit einer inseitigen Wärmeisolierung versehen ist, kann der Druckbehälter den schnellen Temperaturänderungen standhalten.

Neben den in den Figuren beschriebenen Ausführungsformen sind auch andere Ausführungsformen eines Reaktors gemäß der Erfindung möglich. Anstelle des beschriebenen Beckens kann auch ein Wasserbehälter benutzt werden, der den Druckbehälter nicht umgibt. Anstelle der Abtastpumpe 22 kann eine herkömmliche Niveaumeßeinrichtung verwendet werden.

Patentanwalt und Rechtsanwalt
Dr.-Ing. Dipl.-Ing. Joachim B o e c k e r

0030698

6 Frankfurt/Main 1 , 28.11.1980
Rathenauplatz 2-8  20 887 PE
Telefon: (06 11) *28 23 55
Telex: 4 189 066 itax d

- 12 -

Patentansprüche:

1. Siedewasserreaktor mit einem Reaktorkern (1) und einem diesen umgebenden Druckbehälter (2), der mit mindestens einer Rohrleitung (14) für abzulassenden Dampf und mit mindestens einer Rohrleitung (16) für Speisewasser versehen ist und der bei Normalbetrieb bis zu einer bestimmten Höhe (Normalniveau) (11) mit Wasser gefüllt ist, wobei der Dampfdruck im Druckbehälter einen im wesentlichen konstanten Wert von mindestens 5 MPa hat und wobei der Druckbehälter derart im Verhältnis zu einem Wasserreservoir (3) angeordnet ist, daß das Volumen des Teils des im Reservoir unterbringbaren Wassers, der oberhalb des Reaktorkerns liegt, mindestens ebenso groß ist wie das Volumen des im Druckbehälter befindlichen Wassers, dadurch gekennzeichnet, daß der Druckbehälter (2) ein im wesentlichen hohlzylindrischer Körper mit vertikaler Achse ist, der mit einer inneren wärmeisolierenden Schicht (9) und einem radial innerhalb dieser Schicht angeordneten metallischen Futter (10) ausgerüstet ist, daß wenigstens eine obere Notkühlleitung (19), die in den Druckbehälter (2) oberhalb des Normalniveaus (11) mündet, durch die Wand des Druckbehälters hindurchgeht und über je ein erstes, normalerweise geschlossenes Notkühlventil (19') an das Reservoir (3) angeschlossen ist, daß wenigstens eine untere Notkühlleitung (20), die in den Druckbehälter (2) unterhalb der oberen Notkühlleitung (19) mündet, durch die Wand des Druckbehälters hindurchgeht und über je ein zweites, normalerweise geschlossenes Notkühlventil (20') an das Reservoir (3) angeschlossen ist, daß die ersten Notkühlventile (19') mit je einer ersten Steuervorrichtung (23) und die zweiten Notkühlventile (20')

/13

mit je einer zweiten Steuervorrichtung (24) versehen sind, und daß ein Niveaugeber (22) vorhanden ist, der ein Signal zum Öffnen der ersten (19') und der zweiten (20') Notkühlventile an jede der Steuervorrichtungen (23, 24) zu geben vermag, wenn der Wasserstand im Druckbehälter wenigstens 10 % unter seinem Normalniveau (11) liegt, jedoch noch hoch genug ist, um den Reaktorkern unter Wasser zu halten.

2. Siedewasserreaktor nach Anspruch 1, dadurch gekennzeichnet, daß die Steuervorrichtungen so ausgeführt sind, daß die zweite Steuervorrichtung (24) im Vergleich zu der ersten Steuervorrichtung (23) eine verzögerte Ventilauslösung bewirkt.

3. Siedewasserreaktor nach Anspruch 2, dadurch gekennzeichnet, daß die Verzögerung der zweiten Steuervorrichtung (24) im Bereich von 3 bis 30 Minuten liegt.

4. Siedewasserreaktor nach einem der vorhergehenden Ansprüche, dadurch gekennzeichnet, daß wenigstens eine der ersten Steuervorrichtungen (23) mit einer Verzögerungsanordnung versehen ist, die derart arbeitet, daß wenigstens zwei der ersten Notkühlventile (19') beim Eintreffen desselben Auslösesignals vom Niveaugeber (22) zu verschiedenen Zeitpunkten ansprechen.

5. Siedewasserreaktor nach einem der vorhergehenden Ansprüche, dadurch gekennzeichnet, daß der Niveaugeber ein in den Druckbehälter (2) eingeführtes Abtastrohr (21) und eine mit diesem verbundene, außerhalb des Druckbehälters angeordnete Abtastpumpe (22) umfaßt, und daß mehrere der Notkühlventile (19', 20') je eine Steuervorrichtung (23, 24) haben, die einen hydraulisch gesteuerten Betätigungskörper (28; 55) enthält, dessen Lage für den Zustand des Notkühlventils entscheidend ist und weitgehend von der Druckdifferenz zweier dem Betätigungskörper hydraulisch zugeführter, einander entgegenwirkender Kräfte bestimmt wird, wobei eine dieser Kräfte dem Druck ($P_r$) des Druckbehälters (2) entspricht und die andere der Summe ($P_r$ + $\Delta$ P) aus diesem Druck und einem zusätzlichen, von der Abtastpumpe (2) erzeugten Druck ($\Delta$ P) entspricht.

6. Siedewasserreaktor nach Anspruch 5, dadurch gekennzeichnet, daß die ersten und zweiten Notkühlventile je ein Ventilgehäuse (50) haben, das mit einem Hochdruckkanal (51) und einem Niederdruckkanal (52) versehen ist, wobei der letztere an das Reservoir (3) und der erstere an eine der Notkühlleitungen (19,20) angeschlossen ist und im Inneren des Ventilgehäuses mit einem Ventilsitz (53) endet, daß das Ventilgehäuse (50) ein herausragendes, zylindrisches, mit seiner Längsachse auf den Ventilsitz (53) gerichtetes Gehäuseteil (56) hat, welches einen koaxialen axial beweglich angeordneten Betätigungskörper (55) enthält, daß das axial innere Ende dieses Betätigungskörpers (55) mit einem dem Ventilsitz angepaßten Ventilkörper (54) mechanisch verbunden ist, während das axial äußere Ende dieses Betätigungskörpers (55) an dem axial inneren Ende eines koaxial in dem Gehäuseteil (56) angeordneten Balgens (59) anliegt, und daß das axial äußere Ende dieses Balgens an eine Stirnwand (57) des zylindrischen Gehäuseteils (56) anliegt und mit der Ausgangsseite der Abtastpumpe (22) in hydraulischer Verbindung steht.

7. Siedewasserreaktor nach Anspruch 5, dadurch gekennzeichnet, daß mindestens eins der ersten (19') und und mindestens eins der zweiten (20') Notkühlventile mit Hilfe mindestens einer mit einer ersten (26) und einer zweiten (25) hydraulischen Betätigungsleitung versehenen hydraulischen Druckdifferenzvorrichtung (23, 24) derart gesteuert werden, daß die Notkühlventile (19', 20') geschlossen sind, wenn die Differenz zwischen den Drücken in den beiden Betätigungsleitungen (26, 25) über einem bestimmten Wert liegt, daß die Notkühlventile geöffnet werden, wenn die genannte Druckdifferenz unter diesen Wert sinkt, und daß eine Abtastleitung (21) mit ihrem einen Ende in den Druckbehälter (2) oberhalb des Reaktorkerns (1) und unter dem Normalniveau (11) mündet, während das andere Ende der Abtastleitung (21) an die erste Betätigungsleitung (26) sowie an die Eingangsseite einer außerhalb des Druckbehälters (2) angeordneten Abtastpumpe (22) angeschlossen ist, die mit ihrer Ausgangsseite an die zweite Betätigungsleitung (25) angeschlossen ist.

8. Siedewasserreaktor nach einem der Ansprüche 1 bis 5 oder 7, dadurch gekennzeichnet, daß jedes Notkühlventil (19, 20) eine Betätigungsvorrichtung für einen Ventilteller (40) enthält, welche Betätigungsvorrichtung eine Feder (44), die eine Betätigungskraft in Öffnungsrichtung des Ventils erzeugt, und einen Kolben (42) enthält, der von einem Druckmittel in Schließrichtung des Ventils (19, 20) beaufschlagt wird, und daß Ablaßventile für dieses Druckmittel in Abhängigkeit vom Wasserniveau (11) im Reaktor derart gesteuert werden, daß ein zu niedriges Wasserniveau ein Öffnen der genannten Ablaßventile und dadurch ein Öffnen der Notkühlventile (19, 20) veranlaßt.

FIG.1

FIG.2

0030698

FIG. 4

FIG. 3

20 887 P2
0030698

0030698

FIG.5